Europäisches Patentamt

European Patent Office

Office européen des brevets

(11) Numéro de publication : **0 480 779 A1**

## (12) DEMANDE DE BREVET EUROPEEN

(21) Numéro de dépôt : **91402058.1**

(22) Date de dépôt : **24.07.91**

(51) Int. Cl.$^5$ : **C02F 1/46**

(30) Priorité : **24.07.90 FR 9009462**

(43) Date de publication de la demande :
**15.04.92 Bulletin 92/16**

(84) Etats contractants désignés :
**AT BE CH DE DK ES FR GB GR IT LI LU NL SE**

(71) Demandeur : **Combe, Patrice Guy Noel**
**Niversac**
**Saint Pierre de Chignac (Dordogne) (FR)**

(72) Inventeur : **Combe, Patrice Guy Noel**
**Niversac**
**Saint Pierre de Chignac (Dordogne) (FR)**

(74) Mandataire : **Rataboul, Michel**
**Cabinet Michel Rataboul 69, rue de Richelieu**
**F-75002 Paris (FR)**

(54) **Procédé pour le traitement physico-chimique de liquides.**

(57)   Le procédé est destiné au traitement de liquides tels que des liquides industriels très chargés et, en particulier contenant des corps gras, ou des eaux notamment pour piscines.
   Il est caractérisé en ce que l'on dérive une fraction du liquide dit "principal" pour constituer un liquide dit "auxiliaire", que l'on soumet ce liquide auxiliaire à un traitement physico-chimique dans des conditions physiques favorables et que l'on règle ce traitement de telle sorte qu'il soit excessif compte tenu des caractéristiques physiques, chimiques et biologiques dudit liquide auxiliaire, puis que l'on mêle la totalité de ce liquide auxiliaire ainsi traité au liquide principal dont les caractéristiques physiques, chimiques et biologiques justifient le traitement qui était excessif pour le seul liquide auxiliaire.
   Le traitement physico-chimique peut être une ionisation, une génération de chlore in situ, une soumission à de l'ozone ou autres, même dangereux ou difficiles à conduire du fait de l'éloignement possible du site de traitement et du site d'utilisation.

FIG.1

EP 0 480 779 A1

Jouve, 18, rue Saint-Denis, 75001 PARIS

On connaît déjà des procédés de traitement de liquides usés dont les plus complexes s'établissent en plusieurs phases successives : décantation, filtration, purification, stérilisation, etc.

L'opération de stérilisation peut être réalisée de plusieurs manières : ajout au liquide de produits chimiques tels que le chlore, passage du liquide en regard d'un émetteur d'ozone, soumission du liquide à un procédé électrophysique : l'ionisation.

Pour cela, on utilise un vase d'ionisation qui est une capacité intercalée sur une conduite et qui contient des électrodes alimentées en courant électrique selon deux polarités opposées, afin de provoquer au sein même du liquide l'émission d'ions métalliques (cuivre et argent par exemple) qui ont la propriété de détruire les germes, bactéries et micro-organismes.

Par construction, il est indispensable qu'un courant électrique prenne naissance dans le liquide entre les électrodes de polarités opposées, faute de quoi il n'y a aucune émission d'ions et, partant, aucune stérilisation du liquide.

Or certains liquides sont très néfastes au bon fonctionnement du vase d'ionisation. D'autres conditions d'utilisation rendent les procédés électrophysiques inopérants : débit trop élevé, vitesse d'écoulement excessive etc.

Il faut rappeler que, de toutes façons, l'émission d'ions a pour conséquence directe l'érosion des électrodes et donc une amincissement qui se traduit par une modification des conditions initiales puisque l'écartement des électrodes augmente. Cet inconvénient est profondément agravé lorsque le liquide est de nature telle qu'il a des effets agressifs sur les électrodes car ces effets s'accroîssent avec le temps et amplifient les inconvénients de l'amincissement qui lui aussi augmente avec le temps.

Les applications théoriquement possibles de l'ionisation au sein de liquides en vue de leur assainissement sont nombreuses mais pratiquement, les conditions réelles sont telles que l'ionisation s'avère inutilisable. En voici quelques cas :

– installations de lubrification eau-huile dans l'industrie : des huiles étrangères non émulsionnables présentes dans le liquide neutralisent les électrodes.

– installations de lubrification eau-huile dans l'industrie : des huiles étrangères émulsionnables non "relarguées" et, donc, présentes dans la masse neutralisent les électrodes. Une huile relarguée est une huile dont les particules montent en surface et y sont piégées en vue de leur élimination.

– le traitement d'eaux industrielles en circuit non fermé et dont le débit est tel que les électrodes n'ont pas le temps d'agir.

– le traitement d'eaux industrielles fortement chargées en produits étrangers susceptibles de neutraliser les électrodes.

– installations nécessitant la circulation de liquides à très haute pression, ce quine permet pas l'installation d'électrodes.

– installations interdisant l'utilisation d'une pompe de recyclage à cause des remous qu'elle provoque (c'est le cas des humidicateurs d'air conditionné).

– installations où règne le risque de fortes pointes de pollution auxquelles le principe de l'ionisation ne permet pas de s'adapter en un temps bref.

– traitement d'eaux à pH alcalin très marqué ou d'eaux dépourvues d'ions et pour lesquelles les électrodes ont un mauvais fonctionnement.

La présente invention propose une solution nouvelle qui permet l'utilisation de l'ionisation même dans des cas très difficiles, voire actuellement impossibles.

A cette fin, l'invention a pour objet un procédé pour le traitement de liquides caractérisé en ce que l'on dérive une fraction du liquide dit "principal" pour constituer un liquide dit "auxiliaire", que l'on soumet ce liquide auxiliaire à un traitement physico-chimique dans des conditions physiques favorables et que l'on règle ce traitement de telle sorte qu'il soit excessif compte tenu des caractéristiques physiques, chimiques et biologiques dudit liquide auxiliaire, puis que l'on mêle ce liquide auxiliaire ainsi traité au liquide principal dont les caractéristiques physiques, chimiques et biologiques justifient le traitement qui était excessif pour le seul liquide auxiliaire.

Selon d'autres caractéristiques de ce procédé:

– le liquide principal, et éventuellement le liquide auxiliaire, est/sont soumis à une épuration, par exemple par filtration, avant mélange des deux liquides;

– il est appliqué au cours d'un processus selon lequel le liquide principal circule en circuit fermé entre au moins un site d'utilisation et une station d'épuration, notamment par filtration et analogue, et l'on épure la totalité du liquide principal provenant du site d'utilisation, puis l'on dérive une fraction du liquide épuré pour constituer le liquide auxiliaire, on soumet ce liquide auxiliaire épuré au traitement physico-chimique excessif, puis l'on introduit le liquide auxiliaire épuré et traité dans le liquide principal épuré mais non traité en amont du/des site/sites d'utilisation;

– on dérive le liquide auxiliaire à traiter en continu pour l'introduire également en continu dans le liquide principal épuré mais non traité;

– on prévoit une réserve tampon de liquide auxiliaire traité et l'on régule le débit introduit à partir de la réserve tampon;

– on dérive le liquide auxiliaire à traiter de manière discontinue et, pour cela, on constitue au moins une réserve de liquide auxiliaire, puis l'on traite toute la réserve de liquide auxiliaire, puis l'on introduit le liquide auxiliaire traité dans le liquide principal jusqu'à épuisement de la réserve, puis l'on reconstitue la réserve et ainsi de suite;

– on fait circuler la fraction de liquide auxiliaire dans un circuit comprenant un passage obligé par un générateur de traitement physico-chimique afin d'obtenir un brassage du liquide auxiliaire en cours de traitement;

– on introduit du liquide auxiliaire dans une cuve, on interrompt l'introduction de liquide quand il a atteint dans la cuve un niveau prédéterminé, on fait circuler le liquide auxiliaire de la cuve et on le traite jusqu'à un degré prédéterminé, puis l'on introduit le liquide auxiliaire de la cuve dans le circuit du liquide principal en un point situé en amont du site d'utilisation;

– on constitue plusieurs réserves et, dans chacune d'elles, on traite du liquide auxiliaire, puis l'on introduit le liquide traité dans le liquide principal, réserve par réserve;

– on prélève le liquide auxiliaire à la sortie d'un filtre, on le fait passer par un générateur de traitement physico-chimique, on constitue une réserve de ce liquide auxiliaire traité et l'on introduit le liquide auxiliaire dans le liquide principal filtré mais non traité, à partir de ladite réserve;

– le traitement physico-chimique est une stérilisation à l'ozone;

– le traitement physico-chimique est une stérilisation par émission d'ions in situ;

– le traitement physico-chimique est une stérilisation par création in situ de réactions, telles que celles qui produisent de l'hypochlorite de sodium.

L'invention a également pour objet une installation pour le traitement de liquides, du type comprenant un circuit principal ayant une entrée pour le liquide à traiter et au moins une sortie pour le liquide traité, ainsi qu'au moins un générateur de traitement physico-chimique caractérisée en ce qu'elle comprend un circuit auxiliaire destiné à un liquide auxiliaire et comportant au moins un générateur de traitement physico-chimique, des moyens de mise en mouvement de ce liquide auxiliaire et des moyens de raccordement de ce circuit auxiliaire au circuit principal, en amont de la sortie pour le liquide traité.

Selon d'autres caractéristiques de cette installation :

– elle comporte un réservoir intercalé sur le circuit auxiliaire;

– elle comporte au moins une cuve intercalée sur le circuit auxiliaire, en amont des moyens de raccordement et contenant un générateur de traitement physico-chimique;

– elle comporte des moyens de mise en circulation du liquide auxiliaire que contient la cuve, respectivement chaque cuve, en vue de son brassage;

– l'installation est du type comprenant au moins un site d'utilisation de liquide traité, une station d'épuration de liquide utilisé et un circuit reliant cette station à chacun des sites d'utilisation, et elle comprend d'une part un circuit principal ayant un collecteur de liquide utilisé aboutissant à des moyens d'épuration tels qu'un filtre, un répartiteur de liquide épuré provenant des moyens d'épuration et aboutissant au/aux site/sites d'utilisation et, d'autre part, un circuit auxiliaire relié au répartiteur et aboutissant à un générateur de traitement physico-chimique, une conduite s'étendant depuis le générateur jusqu'au répartiteur;

– le générateur de traitement physico-chimique est un générateur d'ozone;

– le générateur de traitement physico-chimique est un vase d'ionisation contenant des électrodes consommables susceptibles d'être alimentées en courant électrique en vue de l'émission d'ions métal dans le liquide auxiliaire;

– le générateur de traitement phisico-chimique est une cellule électro-chimique contenant des électrodes susceptibles d'être alimentées en courant électrique en vue de provoquer des réactions chimiques dans le liquide auxiliaire;

– le liquide auxiliaire est une solution aqueuse de chlorure de sodium et les électrodes sont destinées à l'électrolyse de ladite solution en vue de créer du chlore in situ.

L'invention sera mieux comprise par la description détaillée ci-après faite en référence au dessin annexé. Bien entendu, la description et le dessin ne sont donnés qu'à titre d'exemple indicatif et non limitatif.

La figure 1 est un schéma montrant l'application de l'invention à une installation de traitement de liquides ayant un débit en circuit ouvert.

La figure 2 est un schéma montrant l'application de l'invention à une installation de traitement de liquides ayant un débit en circuit fermé et plusieurs sites d'utilisation du liquide traité.

La figure 3 est une vue schématique en perspective d'une installation conforme à l'invention, du type comprenant une cuve intercalée sur le circuit auxiliaire.

La figure 4 est une vue schématique en coupe montrant une installation conforme à l'invention appliquée à la filtration et à la stérilisation de liquides très chargés.

La figure 5 est une schéma d'une installation conforme à l'invention, mettant en oeuvre un mode de réalisation particulier de l'invention.

La figure 6 est un schéma illustrant un mode de réalisation de l'invention selon trois variantes possibles et appliqué au traitement de l'eau d'une piscine.

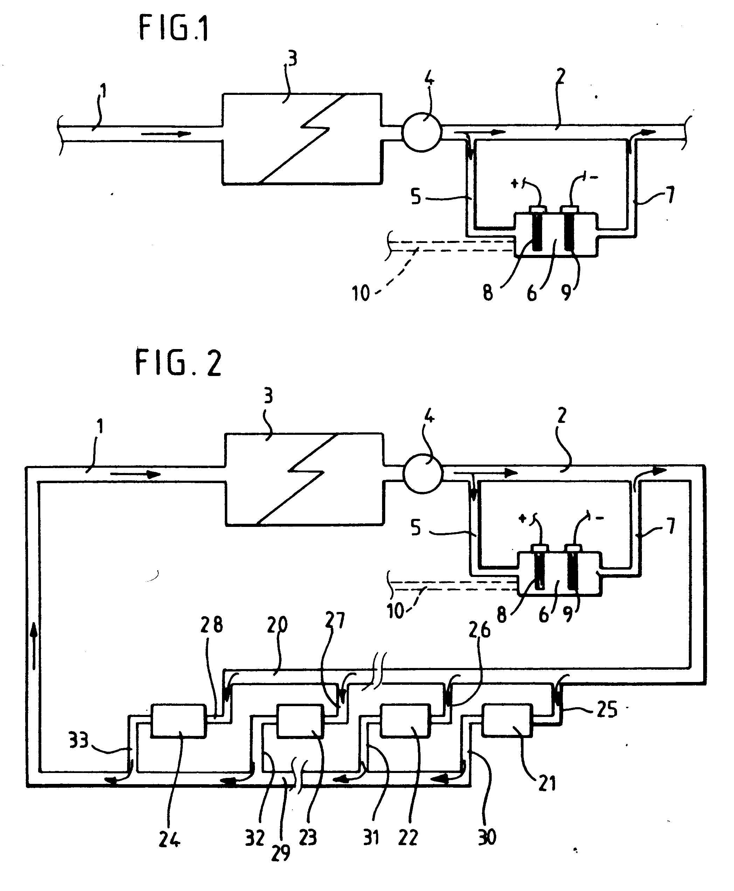

En se reportant à la figure 1, on voit une installation conforme à l'invention et de type simple en ce qu'elle comprend une conduite principale amont 1 constituant l'entrée de liquide à traiter et une conduite principale 2 constituant la sortie de liquide à traiter, ces deux conduites 1 et 2 étant raccordées à une station de traitement 3 qui peut, par exemple, être constituée par un dispositif de filtration plus ou moins complexe, selon les substances que contient le liquide à traiter car il faut d'abord le débarrasser au moins de celles de ces substances qui sont néfastes au fonctionnement correct de l'installation.

Le (ou les) liquide qui circule d'amont en aval et traverse la station 3 est mis en mouvement par une pompe de tout type connu 4.

Sur la conduite principale aval 2, au-delà de la pompe 4, est branchée un circuit auxiliaire comprenant une dérivation amont 5, un vase d'ionisation 6 et une dérivation aval 7.

Ainsi que cela est connu en soi, le vase d'ionisation 6 comprend au moins deux électrodes métalliques 8 et 9 alimentées en courant électrique pour avoir deux polarités opposées. Le liquide est conducteur, de sorte que les électrodes 8 et 9 émettent des ions métalliques en quantité calculée pour provoquer la destruction des germes, bactéries et micro-organismes que le liquide contient.

Avec cette installation, la totalité du liquide provenant de l'entrée de la conduite principale amont 1 est traitée par la station 3 mais une partie de ce liquide est dérivée dans le circuit auxiliaire où il subit l'ionisation dans le vase 6.

On conçoit la station 3 de telle manière qu'à sa sortie le liquide ne contienne plus de substances susceptibles de perturber le fonctionnement électrochimique du vase d'ionisation 6.

On calcule le degré d'ionisation de telle sorte qu'elle soit adaptée non au seul liquide dérivé mais à la totalité du liquide traité. En injectant le liquide ionisé dans le liquide non ionisé au point de raccordement de la conduite principale 2 et de la dérivation 7, on crée un mélange et le liquide en résultant est à la fois traité par la station 3 et ionisé par le vase 6.

Cette installation permet d'ioniser un liquide malgré des conditions d'ensemble défavorables.

On a représenté en traits pointillés une conduite 10 pour illustrer la possibilité d'utiliser un liquide auxiliaire d'appoint qui n'est pas constitué par une fraction prélevée directement dans le liquide dit "principal" (du fait qu'il circule dans les conduites principales 1 et 2).

La dérivation 5 subsiste et le liquide à ioniser arrive à l'entrée du vase d'ionisation 6 par cette conduite 5, mais le liquide d'appoint arrivant par la conduite 10 permet, par exemple, de compenser l'évaporation du liquide qui se produit dans l'installation.

A la sortie du vase 6, le liquide ionisé emprunte toujours la dérivation 7 et se mêle au liquide principal dans la conduite 2.

Lorsque les conditions défavorables viennent d'un débit excessif dans la conduite principale 1-2, il faut constituer une réserve de liquide ionisé et l'introduire par la dérivation 7 en volumes inférieurs à ceux qui intéressent la conduite principale 1-2, le paramètre à prendre en considération étant le degré d'ionisation possible pour le liquide auxiliaire, compte tenu des nécessités du liquide principal.

En se reportant à la figure 2, on voit une installation conforme à l'invention qui fonctionne en circuit fermé et qui comprend plusieurs sites d'utilisation du liquide traité. Les éléments analogues à ceux de la figure 1 portent les mêmes références.

La conduite principale aval 2 constitue un répartiteur 20 qui dessert plusieurs sites 21, 22, 23, 24 par des conduits secondaires 25, 26, 27, 28.

Après utilisation aux sites 21 à 24, le liquide usé rejoint un collecteur 29 par d'autres conduits secondaires 30, 31, 32 et 33, le collecteur 29 étant branché au répartiteur 20 en aval des sites d'utilisation 21 à 24 et en amont de la station de traitement 3.

L'installation de la figure 2 correspond, dans son ensemble, à celles qui existent dans l'industrie pour fournir à des machines outils (sites d'utilisation) des émulsions eau-huile à des fins de lubrification, de refroidissement de pièces usinées etc.

On sait que les liquides utilisés sont très agressifs vis-à-vis des électrodes d'ionisation et l'on voit que grâce à l'invention, on peut s'affranchir de ces inconvénients puisque l'on utilise une petite partie seulement du liquide pour minorer l'effet de neutralisation des électrodes 8 et 9, On peut aussi utiliser un liquide d'appoint non huileux mais miscible dans le liquide principal pour éviter les dépôts gras sur les électrodes 8 et 9, dépôts qui sont de nature isolante et qui rendent l'ionisation inopérante.

Pour certaines applications, il s'avère préférable d'introduire le liquide auxiliaire ionisé dans le liquide principal non plus en continu, comme on vient de le décrire, mais en utilisant un réservoir tampon.

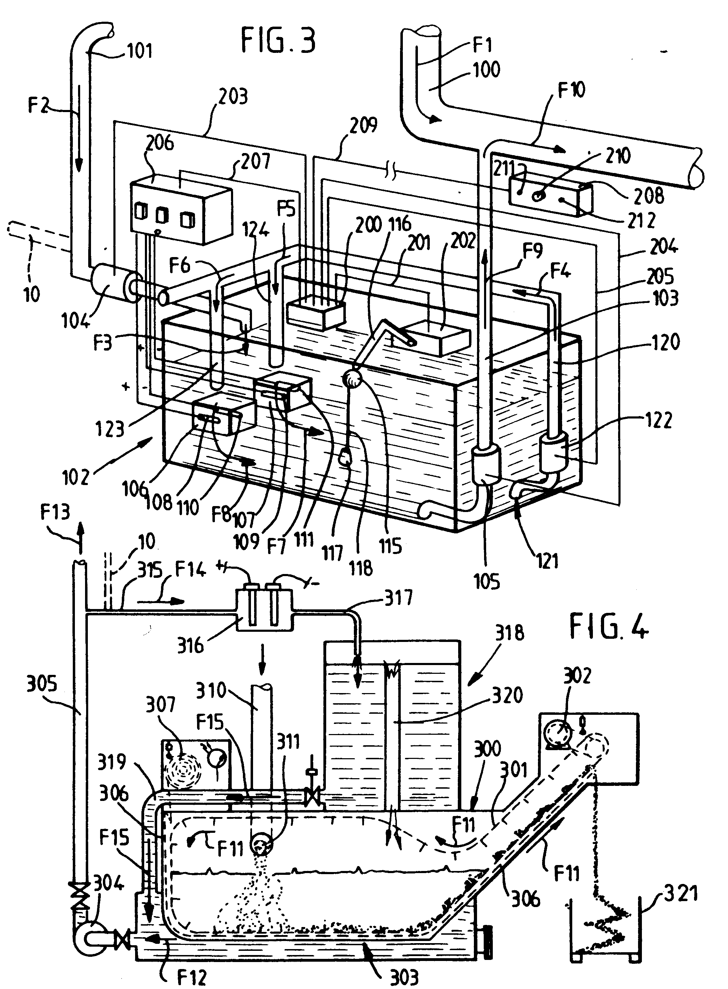

Sur la figure 3, on voit une installation conforme à l'invention dont le circuit auxiliaire comprend une cuve.

Dans une canalisation principale 100, un liquide principal traité, notamment dans une station de filtration (non représentée), circule selon la flèche F1. Le circuit auxiliaire comprend une dérivation amont 101 aboutissant près de la partie supérieure d'une cuve 102 et une dérivation aval 103 qui s'étend depuis le voisinage du fond de la cuve 102, jusqu'à la conduite principale 100.

Sur la dérivation amont 101, se trouve une pompe 104 et sur la dérivation aval 103, se trouve une pompe 105.

Dans la cuve 102, sous l'arrivée de la dérivation amont 101, se trouvent deux vases d'ionisation 106 et 107 contenant des électrodes. Le nombre d'électrodes n'est pas nécessairement limité à deux mais, pour la clarté du dessin, les vases d'ionisation 106 et 107 sont représentés avec chacun deux électrodes respectivement 108-110 et 109-111.

Par prélèvement de liquide principal dans la conduite principale 100, on remplit la cuve 102, au moyen de la pompe 104, le liquide auxiliaire ainsi prélevé parcourant la dérivation 101 selon la flèche F2 et s'écoulant dans la cuve 102 selon la flèche F3. Un flotteur 115 associé à un levier 116 et maintenu par un lest 117 fixé à un lien 118, suit le niveau de liquide et le levier agit sur un dispositif de commande de la pompe 104 afin que celle-ci soit mise à l'arrêt quand le niveau voulu est atteint.

L'arrivée de liquide par la dérivation 101 au-dessus des vases d'ionisation 106 et 107 peut être trop rapide pour que l'on soit assuré que tout le liquide de la cuve 102 est ionisé à un degré suffisant.

Pour parfaire l'ionisation, on prévoit alors un brassage du liquide auxiliaire qui remplit la cuve 102 jusqu'au niveau désiré.

A cette fin, on prévoit une conduite 120 dont l'embouchure 121 se trouve près du fond de la cuve 102 et qui est équipée d'une pompe 122. La conduite 120 s'étend jusqu'à l'aplomb des vases d'ionisation 106 et 107 où elle se subdivise en deux segments 123 et 124 qui débouchent près des vases d'ionisation 106 et 107.

Avec cette structure, on met en route la pompe 122 peu de temps après le début du fonctionnement de la pompe 104 afin que la cuve 102 ait déjà reçu suffisamment de liquide auxiliaire pour permettre l'aspiration de celui-ci par la pompe 122. Le liquide auxiliaire est alors envoyé dans la conduite 120 selon la flèche F4 et se répartit dans les segments 123 et 124 selon les flèches F5 et F6.

Du fait de la pression engendrée par la pompe 122, le liquide est obligé de traverser les vases d'ionisation 106 et 107 et est aspiré vers l'embouchure 121 dans la zone inférieure de la cuve 102 comme l'évoquent les flèches F7 et F8.

Ce fonctionnement en circuit fermé à l'intérieur de la cuve 102 se poursuit jusqu'à obtention de l'ionisation voulue.

Par souci de simplification, on n'a pas représenté les différentes vannes qui sont nécessaires au fonctionnement de cette installation car leur présence et leur emplacement précis sont à la portée de l'homme de métier.

On comprend, par exemple, que pendant le remplissage de la cuve 102, et tant que l'ionisation optimum n'est pas atteinte, le liquide auxiliaire ne doit pas être envoyé dans la conduite principale 100 par la dérivation aval 103. Le liquide principal de la conduite 100 n'est donc pas correct et il faut interrompre sa circulation. Pour cela, il faut prévoir une vanne (non représentée) dont le fonctionnement est coordonné à celui de la cuve 102 et de ses accessoires.

Ainsi, par exemple, selon les applications, la pompe 104 peut être remplacée par une électrovanne.

Quand le degré d'ionisation du liquide auxiliaire est atteint dans la cuve 102, on arrête la pompe 122 et l'on met en route la pompe 105 qui aspire le liquide auxiliaire près du fond de la cuve 102 et l'envoie dans la dérivation aval 103 selon la flèche F9 pour se mêler au liquide principal de la conduite principale 100, comme l'illustre la flèche F10.

La pompe 105 reste en fonctionnement tant que la cuve 102 n'est pas vide. Elle est arrêtée dès que le niveau de liquide auxiliaire atteint une valeur minimale.

On recommence alors à remplir la cuve 102 pour un nouveau cycle.

Le fonctionnement de cette installation peut, bien entendu, être automatisé. A cet effet, un coffret 200 contient tous les composants électriques et électroniques nécessaires pour recevoir les données voulues et pour provoquer le fonctionnement et/ou l'arrêt des différents mécanismes et éléments décrits.

Ainsi, le coffret 200 a une liaison 201 avec un boîtier 202 qui reçoit les informations concernant le niveau de liquide auxiliaire dans la cuve 102.

Selon ces informations, on doit commander les pompes 104, 105 et 122. C'est pourquoi le coffret 200 a une liaison 203 avec la pompe 104, une liaison 204 avec la pompe 105 et une liaison 205 avec la pompe 122.

De même, le coffret 200 doit commander la mise en route et l'arrêt de l'ionisation mais l'ionisation est en soi une opération complexe qui peut comprendre un redresseur pour obtenir un courant continu à bi-polarité, un transformateur pour obtenir un courant à basse tension, un régulateur, etc. C'est pourquoi tous les composants et circuits nécessaires sont regroupés dans un boîtier 206 auquel aboutit une liaison 207 avec le coffret 200.

Enfin, on a représenté un dispositif de commande à distance 208 qui peut être situé dans un local commode et éloigné de la cuve 102, et qui a une liaison 209 avec le coffret 200. Ce dispositif comprend essentiellement un bouton de commande 210 et deux voyants 211 et 212 indiquant les deux fonctions essentielles : remplissage de la cuve 102 et ionisation du liquide auxiliaire.

Par conséquent, en dehors de la mise en marche ou de l'arrêt par le bouton 210, toutes les autres fonctions sont commandées automatiquement et peuvent être gérées par un microprocesseur situé dans le coffret 200.

Sur la figure 4, on a représenté un autre mode de réalisation de l'invention appliqué à une station de filtration de liquides très chargés, par exemple en copeaux ou en limaille.

Cette installation comprend une enceinte 300 contenant les moyens de filtration proprement dits et qui comprennent une chaine sans fin 301 munie de taquets de dragage transversaux et entraînée par un motoréducteur 302. Elle est guidée par des pignons de renvoi, des glissières et autres (non représentés) dont la conception est à la portée de l'homme de métier, afin de s'étendre au-dessus du fond de l'enceinte 300, ce qui détermine une chambre inférieure 303 de préférence délimitée à sa partie supérieure par une tôle perforée servant de soutien et laissant transiter le liquide à filtrer. Dans la chambre 303 règne une dépression, du fait qu'une pompe 304 placée sur une conduite principale aval 305 aspire le liquide qui se trouve dans cette chambre 303, alors que le liquide n'y parvient qu'en traversant l'ensemble filtrant qui crée nécessairement une perte de charge.

La chaîne de dragage 301 est associée à une nappe de tissu ou de papier 306 stockée en rouleau 307 qui la suit quand elle est mise en mouvement selon les flèches F11.

Le liquide à filtrer (liquide principal) provient d'un ou plusieurs sites d'utilisation par une conduite principale amont 310 dont l'embouchure 311 dans l'enceinte 300 est située au-dessus du brin inférieur de la chaîne 301.

Après avoir traversé la chaîne de dragage, le tissu filtrant 306, la tôle perforée et le gâteau formé par les matières retenues, le liquide filtré atteint la chambre 303. Il est mis en mouvement selon la flèche F12 par la pompe 304 qui le renvoie vers le ou les sites d'utilisation selon la flèche F13, par la conduite principale aval 305.

Le circuit auxiliaire comprend une dérivation amont 315 qui traverse un vase d'ionisation 316 de type déjà décrit, une dérivation intermédiaire 317 qui s'étend depuis le vase 316 jusqu'au dessus d'un réservoir 318 et une dérivation aval 319 qui s'étend depuis le bas du réservoir 318 jusqu'à la chambre 303, dans sa partie la plus proche de la pompe 304.

Avec cette construction, une fraction du liquide principal filtré qui circule dans la conduite principale aval 305 est dérivée selon la flèche F14 vers le vase d'ionisation 316 et constitue un liquide auxiliaire qui se charge d'ions métalliques.

Ce liquide auxiliaire est stocké dans le réservoir 318 qui possède un passage axial 320 constituant un trop plein permettant à du liquide auxiliaire de s'écouler librement vers l'enceinte 300 si les débits d'entrée et de sortie du réservoir 318 ne sont pas équilibrés.

Le liquide auxiliaire issu du liquide principal filtré, et maintenant ionisé, s'écoule par gravité selon les flèches F15 et rejoint le liquide principal filtré mais non ionisé à la sortie de la chambre inférieure 303.

On ne décrira pas plus en détail le fonctionnement de la station de filtration proprement dite car la conception de celle-ci ne fait pas partie de l'invention. Néanmoins, il est bon de préciser que périodiquement la chaîne de dragage 301 est mise en mouvement afin d'extraire les impuretés déposées. L'ensemble de ces impuretés et du tissu souillé est déchargé dans des réceptacles 321 qui sont évacués quand ils sont pleins.

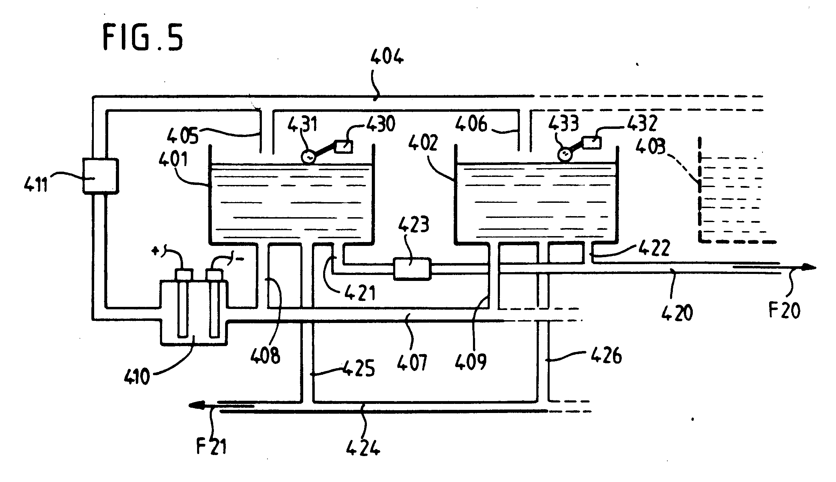

En se reportant maintenant à la figure 5, on voit une mode de réalisation particulier de l'invention selon lequel on constitue plusieurs réserves.

On a représenté ici deux cuves 401 et 402 ainsi qu'une troisième cuve 403 indiquée partiellement en trait pointillé, afin de montrer que le nombre de cuves n'est pas limité à deux mais peut varier selon les applications.

Au-dessus des cuves 401, 402 et 403, se trouve une conduite 404 dont des dérivations 405 et 406 débouchent à l'aplomb des cuves.

Au-dessous des cuves 401, 402 et 403, se trouve un collecteur 407 auquel aboutissent des conduites individuelles 408, 409 etc.

Un vase d'ionisation 410 est placé sur le collecteur 407, lequel se boucle avec la conduite 404 par une pompe de mise en mouvement 411.

On comprend que lorsque la pompe 411 est en fonctionnement, elle aspire le liquide des cuves par le collecteur 407 et le reverse par la conduite 404, le tout en circuit fermé, comme on l'a décrit plus haut en regard de la figure 3, en vue de brasser le liquide.

Comme dit précédemment, on n'a pas représenté les vannes nécessaires à l'ouverture et à la fermeture des différentes conduites en cause, afin de ne pas surcharger le dessin et de ne pas compliquer la description, le choix de ces vannes, leur emplacement et leur commande étant à la portée de l'homme de métier.

Ainsi, par exemple, il est évident que pour remplir une cuve vide, il faut admettre du liquide à ioniser par la conduite 404 et la dérivation 405-406 voulue tandis que la conduite individuelle 408-409 correspondante est fermée.

Chaque cuve est reliée à un collecteur 420 par une conduite individuelle 421, 422 ... Sur le collecteur 420, se trouve une pompe de service 423 qui est destinée à vider la cuve dont la conduite 421-422... est ouverte, en vue d'envoyer le liquide ionisé de ladite cuve, selon la flèche F20, vers une canalisation (non représentée) dans laquelle circule le liquide principal en amont du site d'utilisation.

Enfin, chaque cuve est reliée à une collecteur d'évacuation 424 par une conduite individuelle 425, 426 ..., collecteur 424 qui dirige vers un lieu de décharge (réseau d'égoûts par exemple) du liquide de lavage et de purge selon la flèche F21.

Cette installation fonctionne de la manière suivante:

On suppose que toutes les cuves sont vides, bien qu'en fonctionnement normal le cycle prévoit au contraire qu'une cuve, au moins, est pleine quand une autre est vide.

On commence donc par remplir la cuve 401 qui est associée à un dispositif avertisseur de remplissage 430 ayant un flotteur 431, et quand le flotteur 431 atteint un niveau prédéterminé, le dispositif 430 commande automatiquement l'ouverture de la conduite 408 puis régule l'ouverture de la conduite 405 afin de maintenir le niveau à la valeur prédéterminée pendant que la pompe 411 assure la circulation de liquide en circuit fermé. Ce liquide se charge en ions dans le vase 410 et, petit à petit, tout le volume de liquide de la cuve 401 est ionisé et constitue une réserve prête à l'emploi.

On prend garde à éviter la saturation du liquide afin que son degré d'ionisation reste inférieur à la valeur pour laquelle la concentration en ions n'a plus aucun effet sur le liquide et se traduit, au contraire, par une dénaturation conduisant, par exemple, à la création d'hydroxyde et/ou de sulfate de cuivre neutre, c'est-à-dire inapte à la stérilisation recherchée, et provoquant la formation de dépôts susceptibles d'occasionner des obstructions.

Pour cela, on peut prévoir un organe de mesure (non représenté) acouplé à un moyen commandant l'arrêt de la pompe 411, ou bien calculer une fois pour toutes le temps de brassage en fonction du volume de liquide traité et de la puissance du vase d'ionisation 410, puissance qui dépend, notamment, du nombre d'électrodes qu'il contient.

Quand le liquide, qui circule en circuit fermé grâce à la pompe 411, est suffisamment ionisé par ses passages répétés dans le vase d'ionisation 410, la pompe 411 est arrêtée, la conduite 408 est fermée, la conduite 421 est ouverte et la pompe de service 423 est mise en route pour conduire le liquide ionisé selon la flèche F20 jusqu'à la canalisation dans laquelle se trouve le liquide principal.

Cette situation reste inchangée tant que la cuve 401 n'est pas vide.

Lorsqu'elle est vide, le cycle décrit reprend.

Selon les circonstances, le liquide auxiliaire qui circule a des effets d'encrassement plus ou moins marqués. Afin d'éviter cet inconvénient, on prévoit un nettoyage et une purge plus ou moins fréquents. Pour cela, on ferme les conduites 408 et 421, puis on admet du liquide par la conduite 405 jusqu'à ce qu'il atteigne un niveau prédéterminé mais de toutes façons inférieur à celui de la cuve pleine.

On peut, si cela est nécessaire, procéder à un brossage et/ou à une agitation pour détacher les dépôts éventuels, puis on ouvre la conduite 425 pour évacuer ce liquide impur qui est dirigé selon la flèche F21 jusqu'à un site de décharge.

En réalité, on prend en considération au moins deux cuves en même temps, afin que le liquide de l'une soit ionisé correctement quand le liquide de l'autre a été envoyé dans le collecteur 420, de sorte que l'installation est en permanence disponible et est en mesure d'assurer une ionisation quasi permanente du liquide principal bien que l'on agisse cuve par cuve, réserve par réserve, c'est-à-dire de manière discontinue.

Tout ce qui a été décrit en référence à la cuve 401 s'applique mutatis mutandis à la cuve 402 ou à toute autre.

Lorsque la réserve de liquide ionisé est prête dans la cuve 401, la cuve 402 vient d'être vidée et l'on reprend aussitôt son remplissage. La pompe 411 est mise en route, la conduite 406 ouverte, la conduite 409 fermée, la conduite 422 fermée, la conduite 426 fermée. Le liquide auxiliaire remplit la cuve 402 jusqu'à ce que le flotteur 433 du dispositif 432 indique que le niveau correct est atteint. La conduite 409 est alors ouverte, le liquide auxiliaire circulant alors en circuit fermé. Le niveau dans la cuve 402 s'établit si les sections de passages des conduites 406 et 409 assurent un débit d'entrée égal au débit de sortie.

Quand la réserve de liquide ionisé est prête dans la cuve 402, la cuve 401 ou la cuve 403 vient d'être vidée et l'on reprend aussitôt son remplissage.

Il est possible d'introduire le liquide auxiliaire ionisé dans le liquide principal cuve par cuve ou bien en quantités plus importantes, par exemple tout le liquide ionisé de deux ou de trois cuves. L'important est de pouvoir délivrer au moment voulu la quantité de liquide ionisé nécessaire, sachant qu'il a un degré d'ionisation constant et, donc, connu.

On peut faire fonctionner un nombre plus ou moins grand de cuves selon les circonstances, c'est-à-dire selon le degré d'ionisation nécessaire pour le liquide principal.

En effet, le degré d'ionisation est une fonction directe du degré d'impureté du liquide principal. On sait, par exemple, que des bactéries détruisent les qualités de certaines huiles et qu'il faut absolument limiter leur nombre autant que faire se peut. Ce n'est pas le même problème que de faire passer le nombre de bactéries de 10 milliards à 100.000 ou de 100.000 à 0.

Comme on plafonne volontairement le degré d'ionisation au-dessous de la saturation, c'est la quantité de liquide ionisé qu'il faut faire varier et non le degré d'ionisation qui est maintenu à une valeur constante.

Ainsi, on peut utiliser deux cuves quand le liquide principal est relativement pur puis passer à trois, quatre, cinq et ainsi de suite, au fur et à mesure que le liquide principal se charge d'impuretés, ce qui peut se produire, tout simplement, avec le temps. En effet, certaines installations importantes ne sont mises à l'arrêt qu'une seule fois par an pour une remise en état complète et les conditions de fonctionnement ne sont évidemment pas les mêmes au début et à la fin d'un cycle annuel.

Selon ce mode de réalisation de l'invention, on constitue au moins deux réserves mais cela n'implique pas nécessairement la présence de plusieurs cuves indépendantes : il peut s'agir aussi de plusieurs compartiments d'un même bac, bien que cette solution soit d'application moins souple du fait qu'alors le bac est de grandes dimensions et ne permet pas une adaptation modulaire, cuve par cuve, selon les différentes applications que la clientèle prévoit.

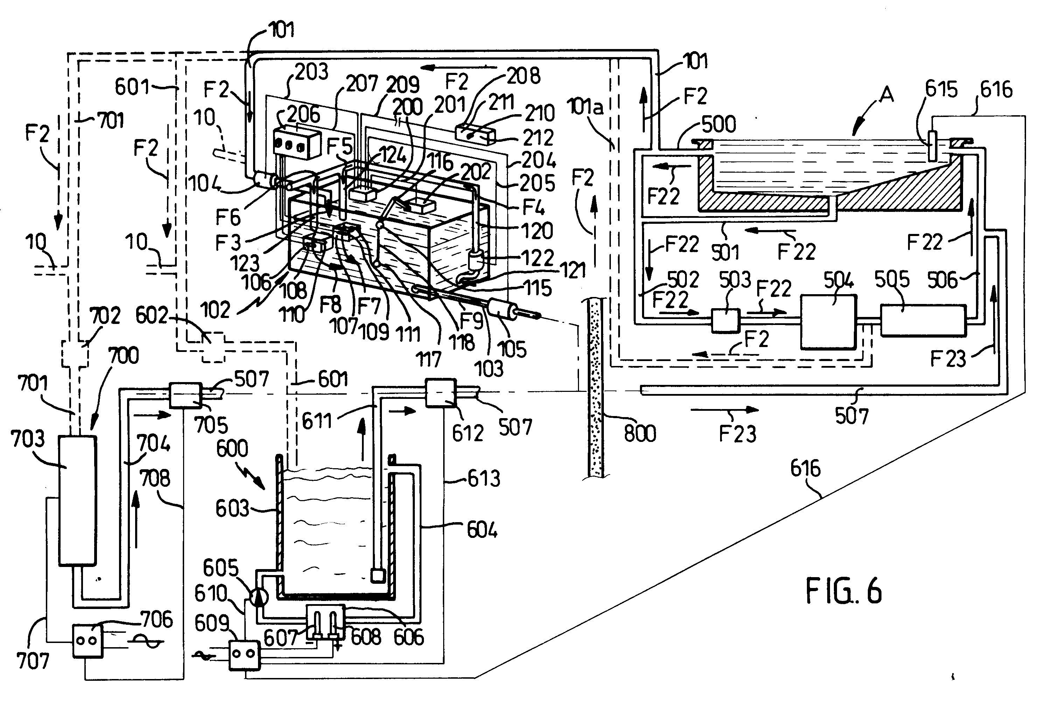

Sur la figure 6 on a représenté l'application de l'invention à la stérilisaton de l'eau d'une piscine A, selon trois mode de réalisation différents afin de mettre en évidence que les branchements d'entrée et de sortie sont toujours identiques bien que l'on adopte trois systèmes différents de traitement physico-chimiques.

Le circuit spécifique à la piscine A comprend une conduite de sortie d'eau de surface 500 et une conduite de sortie d'eau de fond 501 qui aboutissent à une conduite d'évacuation commune 502 équipée d'une pompe 503, d'un filtre 504 et d'un réchauffeur 505 dont la sortie débouche dans une conduite d'alimentation 506.

L'eau de la piscine A est donc constamment recyclée en circuit fermé, filtrée et réchauffée, selon les flèches F22.

La stérilisation peut être obtenue avec l'installation de la figure 3, comme on le voit à la partie supérieure de la figure 6. Comme l'eau de la piscine A qui se trouve dans la conduite d'évacuation 500 est propre relativement à ce qu'est un fluide industriel usagé, on peut prélever le liquide auxiliaire sur la conduite 500 alors qu'avec les installations décrites plus haut, appliquées à ces liquides très chargés, il est impératif de prélever le liquide auxiliaire après épuration (filtration). Mais, bien entendu, on peut aussi, dans le cas d'une piscine, prélever le liquide auxiliaire en aval du filtre 504 pour disposer d'un liquide auxiliaire à la fois filtré et stérilisé, ce que l'on a représenté en trait pointillé par la conduite 101a.

L'eau auxiliaire prélevée est mise en circulation selon les flèches F2 par la pompe 104, que l'on adopte une conduite 101 piquée en amont du filtre 504 ou une conduite 101a piquée en aval.

Le fonctionnement de l'installation de stérilisation par ionisation a déjà été décrit plus haut et l'on se contentera de rappeler que l'eau de la cuve 102, éventuellement additionnée d'eau d'appoint arrivant par la conduite 10, est brassée jusqu'à obtention de l'ionisation voulue dans toute la masse d'eau et quand cela est atteint, la pompe 105, pilotée par les coffrets 200 et 206, est mise en route pour envoyer la quantité voulue d'eau ionisée liquide stérilisant, dans la dérivation aval 103 et de là, selon les flèches F23, dans une conduite 507 aboutissant à la conduite d'alimentation 506, en aval de l'installation d'épuration de la piscine A.

Cette dernière est donc alimentée par un mélange d'eau filtrée seulement et de liquide stérilisant sous forme d'eau ionisée, filtrée ou pas selon que l'on adopte une conduite 101 ou une conduite 101a. Ce mélange est élaboré et régulé pour être adapté aux circonstances, afin que l'eau de la piscine A soit propre et pure.

La description ci-dessus montre que l'invention permet d'utiliser les procédés électrophysiques de stérilisation pour des applications tout à fait nouvelles puisque l'invention permet de s'affranchir des difficultés, voire des impossibilités pratiques.

Mais l'invention permet aussi d'autres applications et de prévoir un traitement différent de l'ionisation que l'on vient de décrire.

On peut, par exemple, utiliser de l'hypochlorite de sodium créé in situ.

Le procédé connu consiste à mettre du sel dans la piscine elle même et à faire circuler ce mélange dans une cellule électrochimique qui contient des électrodes alimentées en courant électrique et plongées dans l'eau salée en mouvement afin de provoquer une électrolyse donnant naissance, à l'anode, à l'hypochlorite de sodium.

Mais à la cathode, le sodium réagit sur l'eau pour donner de l'hydrogène et de la soude.

Or, si la soude diffuse vers l'anode, elle absorbe le chlore pour donner de l'eau de Javel et pour éviter cela, on prend soin de diriger le mouvement de la solution de l'anode vers la cathode mais il s'agit d'une simple précaution et non d'une réelle garantie. Pour isoler la soude, on place un diaphragme poreux entre les électrodes mais les nécessités du fonctionnement, de la surveillance et de l'entretien de ces électrolyseurs limitent leur emploi à l'industrie car ils sont inaptes à leur application aux piscines qui doivent avoir un fonctionnement simple et automatique.

Avec l'invention, on utilise une installation séparée 600 à laquelle aboutit une canalisation 601, équivalente à la conduite 101, pour traiter l'eau auxiliaire prélevée sur la conduite 500 ou sur la conduite 502, selon les explications données plus haut.

La conduite 601 est équipée d'une pompe 602 équivalente à la pompe 104, et débouche dans une cuve 603 qui contient une solution aqueuse de chlorure de sodium et qui est munie d'une canalisation extérieure 604 ayant son origine au voisinage du fond de la cuve 603 et son arrivée à la partie supérieure de la cuve 603.

Une pompe 605 assure la mise en mouvement de la solution aqueuse de chlorure de sodium et son passage dans un vase 606 contenant des électrodes non consommables 607 et 608, de telle sorte que toute la masse de la solution contenue dans la cuve 603 est brassée et traitée de manière homogène.

Un boîtier d'alimentation et de contrôle 609 a une liaison 610 avec la pompe 605 afin de contrôler la concentration en hypochlorite de sodium et d'arrêter le fonctionnement de cette pompe 605 quand la qualité recherchée est atteinte, puis de le rétablir quand cela est nécessaire.

Une conduite d'extraction 611 plonge dans la solution jusqu'au voisinage du fond de la cuve 603 et aboutit à une pompe 612 équivalente à la pompe 105, destinée à introduire de l'eau traitée, devenue un liquide stérilisant, dans l'installation de la piscine, par les conduites 611, 507 et 506. Le boîtier 609 a également une liaison 613 avec la pompe 612 afin d'en contrôler le fonctionnement.

Grâce à l'invention, on n'a plus à craindre un dérèglement à l'intérieur de la piscine elle-même car on n'y introduit de l'eau auxiliaire, liquide stérilisant, qu'après contrôle de celle-ci. Un éventuel incident ne peut donc intéresser que l'installation 600 et non pas la piscine tout entière.

Pour réguler la stérilité de l'eau de la piscine A, on peut prévoir un dispositif 615 qui mesure la concentration de l'eau en soude et en chlore et qui envoie au boîtier 609 les informations nécessaires par une liaison 616.

Parmi les traitements possibles, on peut citer aussi la stérilisation par l'ozone. On sait que l'ozone est un gaz d'odeur forte et pénétrante, très agressif pour certaines personnes qui le supportent très mal. Il est d'ailleurs dangereux à respirer pour tout le monde, alors qu'il est un puissant bactéricide.

Son emploi dans le traitement des eaux, par exemple, est donc délicat, voire dangereux, en cas d'application directe dans l'eau des piscines.

L'invention permet son emploi sans aucun danger grâce à une installation 700 à laquelle aboutit une canalisation 701, équivalente à la conduite 101, pour traiter l'eau auxiliaire prélevée sur la conduite 500 ou sur la conduite 502, selon les explications données plus haut.

La conduite 701 est équipée d'une pompe 702 équivalente à la pompe 104, et aboutit à un générateur d'ozone 703 dont la sortie est raccordée à une conduite 704 munie d'une pompe 705 équivalente à la pompe 612.

Un boîtier d'alimentation et de contrôle 706 a une liaison 707 avec le générateur d'ozone 703 et une liaison 708 avec la pompe 705.

A la lumière des explications qui précèdent, le fonctionnement de cette installation 700 se comprend aisément : l'eau auxiliaire atteint le générateur d'ozone 703 par les conduites 500 (ou 502) et 701, puis après stérilisation à l'ozone, l'eau auxiliaire, devenue un liquide stérilisant, est envoyée dans la conduite 507 au moyen de la pompe 705, laquelle est contrôlée par le boîtier 706 qui reçoit toutes les liaisons nécessaires pour tenir compte des paramètres voulus.

Par la référence 800 on désigne un mur qui symbolise la séparation parfaite que l'on peut ménager entre l'installation propre à la piscine A et l'installation de traitement physico-chimique, quel qu'en soit le type.

On peut ainsi bénéficier des avantages de techniques physico-chimiques sans en subir les inconvénients éventuels. Il est donc possible d'utiliser la stérilisation à l'ozone ou de générer de l'hypochlorite de sodium sans risquer de troubles dans la piscine A elle-même.

## Revendications

**1-** Procédé pour le traitement de liquides <u>caractérisé en ce que</u> l'on dérive une fraction du liquide dit "principal" pour constituer un liquide dit "auxiliaire", que l'on soumet ce liquide auxiliaire à un traitement physico-chimique dans des conditions physiques favorables et que l'on règle ce traitement de telle sorte qu'il soit excessif compte tenu des caractéristiques physiques, chimiques et biologiques dudit liquide auxiliaire, puis que l'on mêle ce liquide auxiliaire ainsi traité au liquide principal dont les caractéristiques physiques, chimiques et biologiques justifient le traitement qui était excessif pour le seul liquide auxiliaire.

**2-** Procédé selon la revendication 1, <u>caractérisé en ce que</u> le liquide principal, et éventuellement le liquide auxiliaire, est/sont soumis à une épuration, par exemple par filtration, avant mélange des deux liquides.

**3 -** Procédé selon la revendication 2, <u>caractérisé en ce qu'il</u> est appliqué au cours d'un processus selon lequel le liquide principal circule en circuit fermé entre au moins un site d'utilisation et une station d'épuration, notamment par filtration et analogue, en ce que l'on épure la totalité du liquide principal provenant du site d'utilisation, puis que l'on dérive une fraction du liquide épuré pour constituer le liquide auxiliaire, que l'on soumet ce liquide auxiliaire épuré au traitement physico-chimique excessif, puis que l'on introduit le liquide auxiliaire épuré et traité dans le liquide principal épuré mais non traité, en amont du/des site/sites d'utilisation.

**4-** Procédé selon la revendication 3, <u>caractérisé en ce que</u> l'on dérive le liquide auxiliaire à traiter en continu pour l'introduire également en continu dans le liquide principal épuré mais non traité.

**5-** Procédé selon la revendication 4, <u>caractérisé en ce que</u> l'on prévoit une réserve tampon de liquide auxiliaire traité et que l'on régule le débit introduit à partir de la réserve tampon.

**6-** Procédé selon la revendication 1, <u>caractérisé en ce que</u> l'on dérive le liquide auxiliaire à traiter de manière discontinue et que, pour cela, on constitue au moins une réserve de liquide auxiliaire, puis que l'on traite toute la réserve de liquide auxiliaire, puis que l'on introduit le liquide auxiliaire traité dans le liquide principal jusqu'à épuisement de la réserve, puis que l'on reconstitue la réserve et ainsi de suite.

**7-** Procédé selon la revendication 6, <u>caractérisé en ce que</u> l'on fait circuler la fraction de liquide auxiliaire dans un circuit comprenant un passage obligé par un générateur de traitement physico-chimique afin d'obtenir un brassage du liquide auxiliaire en cours de traitement.

**8-** Procédé selon la revendication 7, <u>caractérisé en ce que</u> l'on introduit du liquide auxiliaire dans une cuve, que l'on interrompt l'introduction de liquide quand il a atteint dans la cuve un niveau prédéterminé, que l'on fait circuler le liquide auxiliaire de la cuve et qu'on le traite jusqu'à un degré prédéterminé, puis que l'on introduit le liquide auxiliaire de la cuve dans le circuit du liquide principal en un point situé en amont du site d'utilisation.

9- Procédé selon la revendication 6, caractérisé en ce que l'on constitue plusieurs réserves et que, dans chacune d'elles, on traite du liquide auxiliaire, puis que l'on introduit le liquide traité dans le liquide principal, réserve par réserve.

10- Procédé selon la revendication 2, caractérisé en ce que l'on prélève le liquide auxiliaire à la sortie d'un filtre, qu'on le fait passer par un générateur de traitement physico-chimique, que l'on constitue une réserve de ce liquide auxiliaire traité et que l'on introduit le liquide auxiliaire dans le liquide principal filtré mais non traité, à partir de ladite réserve.

11- Procédé selon la revendication 1, caractérise en ce que le traitement physico-chimique est une stérilisation à l'ozone.

12- Procédé selon la revendication 1, caractérisé en ce que, le traitement physico-chimique est une stérilisation par émission d'ions in situ.

13- Procédé selon la revendication 1, caractérisé en ce que le traitement physico-chimique est une stérilisation par création in situ de réactions, telles que celles qui produisent de l'hypochlorite de sodium.

14- Installation pour le traitement de liquides, du type comprenant un circuit principal (1-100-305-404-500-501-502-506) ayant une entrée pour le liquide à traiter et au moins une sortie pour le liquide traité, ainsi qu'au moins un générateur de traitement physico-chimique (6, 106, 107, 316, 410, 606, 703), caractérisé en ce qu'elle comprend un circuit auxiliaire (5-7, 101-103, 315-317, 404-407-408-409-420, 101-601-507, 101-701-507) destiné à un liquide auxiliaire et comportant au moins un générateur de traitement physico-chimique (6, 106 et 107, 316, 410, 606, 703), des moyens de mise en mouvement (4, 104, 105, 122, 304, 411, 423, 602, 702, 612, 705) de ce liquide auxiliaire et des moyens de raccordement de ce circuit auxiliaire (5-7, 101-103, 315-317, 404-407-408-409-420, 101-601-507, 101-701-507) au circuit principal (2, 100, 305, 506), en amont de la sortie pour le liquide traité.

15- Installation selon la revendication 15 caractérisée en ce qu'elle comporte un réservoir (102, 300, 401, 402, 403, 603) intercalé sur le circuit auxiliaire (101-103, 315-317, 404-407-408-409-420, 601-507).

16- Installation selon la revendication 15, caractérisée en ce qu'elle comporte au moins une cuve (102, 401-402-403, 603) intercalé sur le circuit auxiliaire (101-103, 404-407-408-409-420, 601-507), en amont des moyens de raccordement et contenant un générateur de traitement physico-chimique (106-107, 410, 606).

17- Installation selon la revendication 17, caractérisée en ce qu'elle comporte des moyens de mise en circulation (120-121-122-123-124, 404-405-406-407-408-409-411, 604-605) du liquide auxiliaire que contient la cuve (102, 603), respectivement chaque cuve (401-402-403), en vue de son brassage.

18- Installation selon la revendication 15, du type comprenant au moins un site d'utilisation de liquide traité, une station d'épuration de liquide utilisé et un circuit reliant cette station à chacun des sites d'utilisation, caractérisée en ce qu'elle comprend d'une part un circuit principal (2) ayant un collecteur (29) de liquide utilisé aboutissant à des moyens d'épuration tels qu'un filtre (3), un répartiteur (20) de liquide épuré provenant des moyens d'épuration (3) et aboutissant au/aux site/sites d'utilisation (21, 22, 23 et 24) et, d'autre part, un circuit auxiliaire (5-7) relié au répartiteur (20) et aboutissant à un générateur (6) de traitement physico-chimique, une conduite (7) s'étendant depuis le générateur (6) jusqu'au répartiteur (20).

19- Installation selon la revendication 15, du caractérisée en ce que le générateur de traitement physico-chimique est un générateur d'ozone (703).

20- Installation selon la revendication 15, caractérisée en ce que le générateur de traitement physico-chimique est un vase d'ionisation (106-107) contenant des électrodes consommables (108-110, 107-109) susceptibles d'être alimentées en courant électrique en vue de l'émission d'ions métal dans le liquide auxiliaire.

21- Installation selon la revendication 15, caractérisée en ce que le générateur de traitement physico-chimique est une cellule de traitement phisico-chimique est une cellule électro-chimique comprenant des électrodes (607 et 608) susceptibles d'être alimentées en courant électrique en vue de provoquer des réactions chimiques dans le liquide auxiliaire.

22- Installation selon la revendication 22, caractérisée en ce que le liquide auxiliaire est une solution aqueuse de chlorure de sodium et les électrodes (607 et 608) sont destinées à l'électrolyse de ladite solution en vue de créer du chlore in situ.

# FIG.1

# FIG. 2

FIG. 3

FIG. 4

FIG.5

FIG.6

**Office européen des brevets**

# RAPPORT DE RECHERCHE EUROPEENNE

Numero de la demande

EP    91 40 2058

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 693 798 (GALE,S.B.)<br>* colonne 2, ligne 24 - ligne 61 *<br>--- | 1 | C02F1/46 |
| A | GB-A-1 426 017 (DISCOVERY LTD.)<br><br>* page 1, ligne 71 - ligne 82; figure 1 *<br>* page 2, ligne 22 - ligne 35 *<br>--- | 1-4,<br>14-17 | |
| A | DE-A-3 121 336 (FICHEL & SACHS)<br>* revendication 1 *<br>--- | 1,4 | |
| A | AU-B-2 157 677 (THOMAS,N.F.)<br>* page 2, ligne 5 - ligne 11 *<br><br>----- | 1,14 | |

DOMAINES TECHNIQUES RECHERCHES (Int. Cl.5)

C02F

Le présent rapport a été établi pour toutes les revendications

| Lieu de la recherche | Date d'achèvement de la recherche | Examinateur |
|---|---|---|
| LA HAYE | 27 JANVIER 1992 | GONZALEZ ARIAS,M.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)